# EUROPÄISCHE PATENTANMELDUNG

(11) **EP 1 037 489 A2**
(43) Veröffentlichungstag der Anmeldung: **20.09.2000**
(21) Anmeldenummer: 00105868.4
(22) Anmeldetag: 20.03.2000
(51) Int. Cl.: H04Q 7/38

(54) **Verfahren zum Informieren von Mobilteilnehmerstationen über aktuell verfügbare Übertragungsressourcen**

(30) Priorität: 18.03.1999 DE 19912198; 26.04.1999 DE 19918858
(71) Anmelder: SIEMENS AKTIENGESELLSCHAFT, 80333 München (DE)
(72) Erfinder: Schulz, Egon, Dr.-Ing., 80993 München (DE)

(57) **Zusammenfassung**

Bei einem Verfahren zur Übertragung von Informationen über eine Luftschnittstelle in breitbandigen digitalen Funk-Kommunikationssystemen, insbesondere zellularen Mobilfunknetzen, in denen die zu übertragenden Informationen nach einem CDMA-Verfahren teilnehmersepariert sind, werden erfindungsgemäß die Teilnehmerstationen (MS) vor Anforderung von Übertragungsressourcen über alle für sie aktuell verfügbaren Übertragungsressourcen unterrichtet.

## Beschreibung

Die Erfindung betrifft ein Verfahren zur Übertragung von Informationen über eine Luftschnittstelle in einem Funk-Kommunikationssystem.

In zukünftigen universellen mobilen Telekommunikationssystemen, wie beispielsweise dem UMTS-System (Universal Mobile Telecommunication System), das im folgenden zur Darstellung des technischen Hintergrundes der Erfindung dienen soll, ohne die Allgemeinheit ihres Einsatzes einzuschränken, sind zur Informationsübertragung zwischen einer Teilnehmerstation und einer Basisstation Breitband-TDMA/CDMA-Verfahren vorgesehen, die einen Vielfachzugriff durch eine Kombination eines Breitband-TDMA/FDMA-Systems mit einem CDMA-System realisieren, indem in bestimmten Zeitschlitzen (Time Slots) zusätzlich ein Vielfachzugriff nach dem CDMA-Verfahren erfolgt. Für eine flexible Übertragung der Signale zwischen den Stationen sind zwei Modi vorgesehen, Frequenzduplex (FDD) und Zeitduplex (TDD). Beim FDD-Modus handelt es sich um ein Breitband-CDMA, charakterisiert durch die Freiheitsgrade Frequenz und Spreizcode und beim TDD-Modus um ein TD/CDMA-Verfahren, charakterisiert durch die Freiheitsgrade Frequenz, Zeitschlitz und Spreizcode.

Im UMTS-System werden aneinander anschließende Funkzellen zu größeren Zellenstrukturen, sogenannten Clustern, zusammengefügt. Eine optimierte Clusterperiodizität mit gewählter Ressourceneinteilung erlaubt es, gleiche Übertragungskanäle mehrmals oder sogar beliebig oft zu vergeben, beispielsweise gleiche Frequenzbänder oder gleiche Zeitschlitze. Die Aufteilung der Ressourcen unter den Clustern soll einen größtmöglichen Kanalabstand innerhalb einer Funkzelle gewährleisten und zugleich einen maximalen geometrischen Abstand zu den gleichkanäligen Nachbarzellen bieten.

Für den TDD-Modus des UMTS-Systems gehen die Bestrebungen zu Zeitschlitz-Clustern, in denen bestimmte Zeitschlitze für eine bestimmte Basisstation bzw. Funkzelle reserviert sind. Anders ausgedrückt, mehrere Basisstationen teilen sich die Zeitschlitze eines TDMA-Rahmens auf, wodurch gegenseitige Beeinträchtigungen und Störungen zwischen benachbarten Funkzellen oder Sektoren, die von unterschiedlichen Basisstationen des Funk-Kommunikationssystems versorgt werden, minimiert werden. Für den Fall, daß die Nachbar- und Gleichkanalstörungen nicht zu groß sind, besteht auch die Möglichkeit, im Interesse sparsamer Ressourcenverwaltung bestimmte Zeitschlitze an zwei Basisstationen doppelt zu vergeben.

Zeitschlitz-Cluster wird man hautsächlich in Vororten von Großstädten oder in ländlichen Gegenden bilden, die in Großzellen aufgeteilt sind. Ein Ziel ist es, die Teilnehmerstationen zu befähigen, sich den aus ihrer Sicht geeignetsten Zeitschlitz, zum Beispiel hinsichtlich seiner Übertragungsqualität, selbst auszusuchen.

In einem DECT-System (DECT = Digital Enhanced Cordless Telecommunication) gibt es eine Systeminformation, die angibt, welche Zeitschlitze an der betreffenden Feststation zur Verfügung stehen bzw. nicht zur Verfügung stehen. Es handelt sich hierbei um eine sogenannte Blindschlitz-Information über 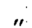 blind 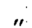 gesetzte Zeitschlitze, beschrieben in der DECT-Spezifikation für den Medium Access Control Layer (MAC), ETS 300-175-3, Kapitel 7.2.4.3.3., Seite 78. Die Blindschlitz-Information bezieht sich hierbei auf die Vollschlitze im DECT-System. Wenn ein entsprechendes Bit in der Blindschlitz-Information gesetzt ist, dann steht sowohl der Mobilstations-Zeitschlitz (Uplink-Zeitschlitz) als auch der Feststations-Zeitschlitz (Downlink-Zeitschlitz) zur Verfügung. Diese Blindschlitz-Information wird in den DECT-Basisstationen festgelegt und im Funkruf-Kanal (Paging Channel) gesendet. Bei den auf dem Markt befindlichen DECT-Feststationen der Firma Siemens beispielsweise ist jeder zweite Zeitschlitz gesperrt, wodurch eine sehr kostengünstige HF-Komponente eingesetzt werden kann. Aufgrund von Messungen aller möglichen Zeitschlitze im DECT-System sucht sich die Teilnehmerstation den Zeitschlitz mit dem geringsten Störpegel aus und fordert beim System bzw. bei der Feststation diesen Zeitschlitz an, um auf diesem eine Verbindung aufzubauen oder um von einem Zeitschlitz auf den selektierten Zeitschlitz zu wechseln. Der neue Kanal kann auch zu einer anderen Feststation gehören. Im DECT-System sowie in weiteren bekannten Systemen mit dynamischer Kanalzuteilung (DCA) erfolgt keine CDMA-Teilnehmerseparierung, weshalb pro Zeitschlitz nur eine Verbindung möglich ist.

Für das UMTS-System ist gleichfalls eine dynamische Kanalzuteilung (DCA) vorgesehen. Dabei sollen einerseits die Kanäle vom System verwaltet werden und andererseits soll die Möglichkeit bestehen, daß die Teilnehmerstationen aufgrund ihrer Umgebung den geeignetsten Kanal selektieren. Hierzu sind derzeit jedoch noch keine adäquaten Lösungsmöglichkeiten bekannt. Die Teilnehmerstationen haben keine Kenntnis über freie Übertragungsressourcen, sie wissen nicht, wieviel Spreizcodesequenzen auf einem Zeitschlitz (TDD-Modus) oder einem Frequenzband (FDD-Modus) belegt sind.

Das Verfahren mit den Merkmalen des Anspruchs 1 gibt eine Lösung für dieses Problem an. Vorteilhafte Weiterentwicklungen der Erfindung sind in den abhängigen Ansprüchen angegeben.

Erfindungsgemäß wird den Teilnehmerstationen in einer Systeminformation im TDD-Modus mitgeteilt, welche Zeitschlitze und wieviel Spreizcodesequenzen aktuell zur Verfügung stehen und im FDD-Modus, wieviele Spreizcodesequenzen aktuell zur Verfügung stehen. Dies kann für jedes einzelne Frequenzband durchgeführt werden. Gemäß dem Erfindungsgedanken ist es vor einer Übertragung wichtig zu wissen, wieviel Übertragungsressourcen noch zur Verfügung stehen, da manche Dienste mehrere Spreizcodes zwecks Übertragung einer höheren Bitrate anfordern. Für eine Übertragung von Sprache benötigt man beispielsweise nur eine Übertragungsressource, also nur einen Zeitschlitz und einen Spreizcode. Für einen 64 kbit/s Datenservice benötigt man hingegen 4 Übertragungsressourcen, also einen Zeitschlitz mit 4 Spreizcodes und für einen 144 kbit/s Datenservice 8 Übertragungsressourcen, also einen Zeitschlitz mit 8 Spreizcodes. Die Übertragungsressourcen können auch auf mehrere Zeitschlitze aufgeteilt sein, beispielsweise könnnen für einen 64 kbit/s Datenservice die Übertragungsressourcen auf 2 Spreizcodes auf dem einen Zeitschlitz und zwei Spreizcodes auf einem anderen Zeitschlitz verteilt sein. Dies natürlich auch auf dem Uplink und Downlink.

Im TDD-Modus ermöglicht es die Erfindung, daß eine Teilnehmerstation besser abschätzen kann, auf welchen Zeitschlitzen noch Übertragungsressourcen frei sind, um dort gezielt eine Verbindung anzufordern. Es kann auch vorkommen, daß eine Teilnehmerstation einen Zeitschlitz selektiert, der unter allen 16 im TDD-Modus zur Verfügung stehenden Zeitschlitzen aus ihrer Sicht die günstigsten Bedingungen hinsichtlich Störungen bzw. Übertragungsqualität besitzt, aus Sicht des Systems jedoch z. B. alle Spreizcodesequenzen für diesen Zeitschlitz vergeben sind. Mit der Erfindung wird die Auswahl einer geeigneten Übertragungsressource beschleunigt und eine Verbindung kommt schneller zustande. Durch den geringeren Signalisierungsaufwand zwischen den Stationen sinkt gleichzeitig der Energieverbrauch in den Teilnehmerstationen, was bedeutet, daß Mobilteile länger netzunabhängig betrieben werden können. Diese Ressourcen-Information kann zum Beispiel auf dem Broadcast Control Channel (BCCH) von den Basisstationen an die Teilnehmerstationen ausgestrahlt werden. In analoger Weise wird im FDD-Modus von den Basisstationen die Anzahl der verfügbaren Spreizcodesequenzen je Frequenzband an die Teilnehmerstationen ausgestrahlt.

Ganz allgemein kann man sagen, daß den Teilnehmerstationen mitgeteilt wird, wieviel Übertragungsressourcen aktuell frei sind oder, was aufs gleiche hinauskommt, welche Dienste aktuell übertragbar sind. Entsprechend können die Übertragungsressourcen entweder für einen hochratigen Datenkanal oder für mehrere gleichzeitige niederratige Sprachkanäle genutzt werden.

Die Erfindung und ihre Vorteile sollen eingehend unter Bezug auf den TDD-Modus an nachfolgendem Ausführungsbeispiels näher erläutert werden.

In der zugehörigen Zeichnungen zeigen
Fig. 1: Ein Mobilfunk-Kommunikationssystem
Fig. 2: Eine schematische Darstellung der Rahmenstruktur eines TDD-Übertragungsverfahrens mit CDMA-Teilnehmerseparierung,
Fig. 3: Ein Beispiel eines Informationselementes über freie Zeitschlitze für ein TD/CDMA-System,
Fig. 4: Ein Beispiel eines Informationselementes über alle Frequenzebänder einer Funkzelle,
Fig. 5: Ein Beispiel eines Informationselementes über die Anzahl verfügbarer Spreizcodesequenzen innerhalb verfügbarer Zeitschlitze und
Fig. 6: Ein Beispiel unter Zusammenfassung beider Informationselemente nach Fig. 3 und Fig. 5 für eine Systeminformation.

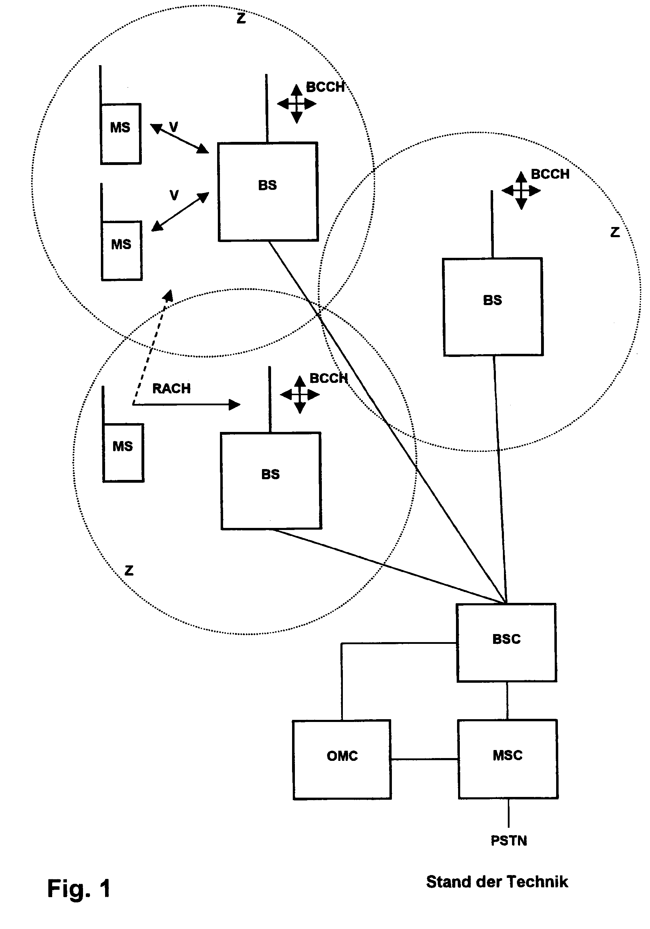

Ein Mobilfunksystem nach Fig. 1, das als Beispiel für ein Funk-Kommunikationssystem dienen soll, besteht aus einer Vielzahl von Mobilvermittlungseinrichtungen MSC, die untereinander vernetzt sind bzw. den Zugang zu einem Festnetz PSTN herstellen und von denen nur eine dargestellt ist. Sie sind mit jeweils zumindest einer Basisstationssteuerung BSC zum Verteilen funktechnischer Übertragungsressourcen und mit einem Betriebs- und Wartungssystem OMC verbunden, welches Organisationsinformationen für das Mobilfunksystem bzw. Teile davon überträgt.

Jede Basisstationssteuerung BSC ermöglicht eine Verbindung zu einer oder mehreren Basisstationen BS. Jede Basisstation BS kann wiederum über eine Luftschnittstelle eine Verbindung zu Teilnehmerstationen MS, beispielsweise Mobilstationen, aufbauen. Durch jede Basisstation BS wird zumindest eine Funkzelle Z gebildet, die mit anderen Funkzellen Z zu einer logischen Gruppe von Funkzellen (Cluster) innerhalb des zellularen Mobilfunksystems zusammengefaßt ist. Bei einer Sektorierung oder bei hierarchischen Zellstrukturen werden pro Basisstation BS auch mehrere Funkzellen Z versorgt.
Über den Broadcast Control Channel (BCCH), einem logischen Kanal in Abwärtsrichtung, werden funknetzspezifische Organisationsinformationen von den Basisstationen BS an die Teilnehmerstationen MS ausgestrahlt. Dies können erfindungsgemäß Systeminformationen über frei verfügbare Übertragungsressourcen sein, anhand welcher eine Teilnehmerstation MS sich vor Mitteilung eines Verbindungswunsches oder bei einer Handoveranforderung, wie zum Beispiel Intracell oder Intercell Handover, orientiert. In Fig. 1 sind ferner beispielhaft zwei stehende Verbindungen V zwischen Teilnehmerstationen MS und einer Basisstation BS und eine Verbindungsanforderung einer weiteren Teilnehmerstation MS über den RACH (Random Access Channel), einem logischen Kanal in Aufwärtsrichtung, dargestellt.

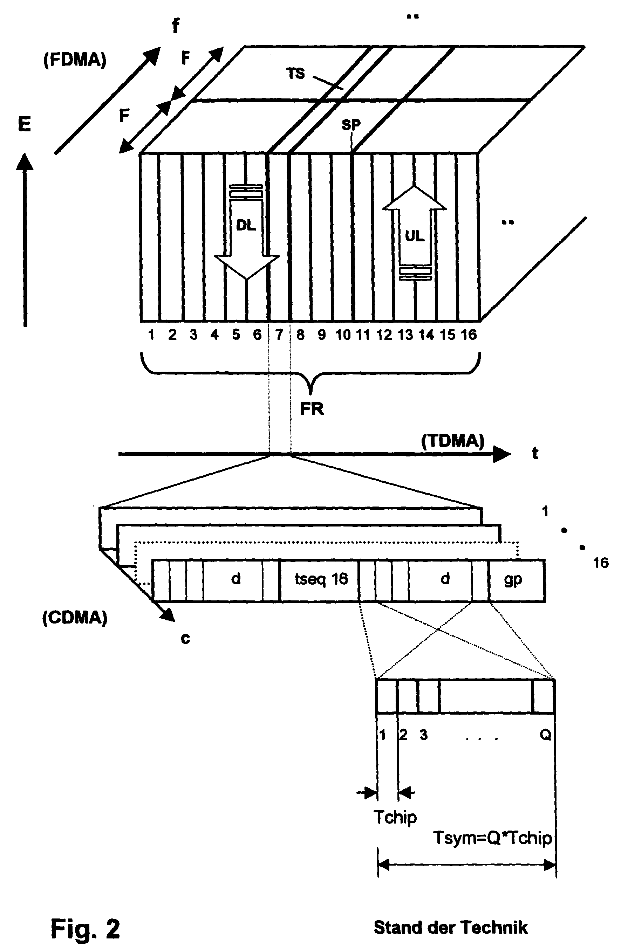

In Fig. 2 ist die Rahmenstruktur einer TDD-Funkübertragung mit Vielfachzugriff (Multiple Access) ersichtlich. Dabei ist das zur Verfügung stehende Frequenzband von 20 MHz in Frequenzbänder mit einer Bandbreite F = 5 MHz auf vier Funkzellen Z eines Clusters aufgeteilt. Jede Frequenz kann in jeder Funkzelle Z wiederholt werden. Durch eine dynamische Kanalzuweisung (DCA) werden die besten Kanäle entsprechend der Situation bezüglich Verbindungswünschen und Vielfachzugriffsinterferenz vergeben. Dies ist die FDMA-Komponente (Frequency Division Multiple Access) des hybriden Vielfachzugriffsverfahrens TD/CDMA. Innerhalb eines jeden Frequenzbandes F = 5 MHz findet des weiteren gemäß einer TDMA-Komponente (Time Division Multiple Access) eine Aufteilung der Zeitachse t in TDMA-Rahmen FR konstanter Länge (10 ms) statt, die wiederum in beispielsweise 16 Zeitschlitze TS von ebenfalls gleicher Zeitdauer (625 µs) mit aufsteigender Numerierung unterteilt sind. In jedem TDMA-Rahmen, von denen nur einer dargestellt ist, wiederholt sich die Numerierung. Mehrere TDMA-Rahmen bilden einen übergeordneten Rahmen, z. B. Superrahmen und wiederum mehrere Superrahmen einen Hyperrahmen. Jeder Verbindung V wird sendeseitig pro Datensymbol eine bestimmte Energie E zugeordnet.

Für die Dauer einer Datenübertragung kann ein und dieselbe Zeitschlitznummer 1 ... 16 einer Teilnehmerstation periodisch im TDMA-Rahmenabstand (d.h. 10 ms-Rahmen) zugewiesen. Es besteht ferner die Möglichkeit, nach einem gewissen Schema den oder die Zeitschlitze periodisch zu wechseln (Time Slot Hopping).

Jeder Basisstation BS sind mehrere Zeitschlitze TS zugeteilt. Ein Teil dieser Zeitschlitze TS wird für die Abwärtsstrecke DL von einer Basisstation BS zu den Teilnehmerstationen MS und ein Teil für die Aufwärtsstrecke UL verwendet. Dazwischen liegt ein Umschaltpunkt SP, der zwecks vielfältiger asymmetrischer Aufteilung der Übertragungsressourcen variabel administrierbar sein kann. Innerhalb eines Zeitschlitzes TS werden Informationen mehrerer Verbindungen V übertragen, indem jeder Zeitschlitz TS nochmals verbindungsindividuell mit einer Teilnehmercodesequenz entsprechend der CDMA-Komponente (Code Division Multiple Access) in UMTS gespreizt ist. Die Spreizung von einzelnen Datensymbolen der zu übertragenden Daten d, in denen empfangsseitig bekannte Trainingssequenzen tsec 1 ... tsec 16 eingebettet sind, bewirkt, daß innerhalb der Symboldauer Tsym Q Chips der Dauer Tchip übertragen werden. Die Q Chips bilden dabei den verbindungsindividuellen Teilnehmercode c. Eine Schutzzeit gp innerhalb des Zeitschlitzes TS dient der Kompensation unterschiedlicher Signallaufzeiten der Verbindungen. Je Zeitschlitz TS stehen 16 Spreizcodes zur Verfügung, wodurch empfangsseitig bis zu 16 Übertragungsressourcen je Zeitschlitz TS (Full Slot) und Frequenzband F separierbar sind.

Zwecks Übertragung von Nutzdaten muß zunächst der Aufbau einer Verbindung von einer Teilnehmerstation MS zu einer Basisstation BS vollzogen werden. Hierzu empfängt die Teilnehmerstation MS die Signale der Organisationskanäle BCCH einer oder mehrerer Basisstationen BS, mißt den für sie leistungsstärksten BCCH innerhalb des Clusters aus und sendet an die Basisstation BS, von der diese Signale ausgehen, eine Ressourcenanforderung über den RACH oder einen Dedicated Channel. Die betreffende Basisstation BS teilt, sofern nicht anderweitige Umstände dies verbieten, der Teilnehmerstation MS eine oder mehrere freie Übertragungsressourcen zu, je nachdem, welcher Dienst angefordert wurde, einen physikalischen Übertragungskanal, charakterisiert durch ein Frequenzband F = 5 MHz, einen Zeitschlitz TS = 625 µs und eine Spreizcodesequenz C. Es kann auch die Möglichkeit bestehen, daß eine Teilnehmerstation MS mehrere Basisstationen BS ausmißt und über die eigene Basisstation BS die Ressourceninformationen der benachbarten Basisstationen anfordert.

Um eine effiziente Auswahl eines Zeitschlitzes TS bzw. von Übertragungsressourcen aus der Sicht einer Teilnehmerstation MS hinsichtlich der Übertragungsqualität zu treffen, werden die Teilnehmerstationen MS von der Basisstation BS benachrichtigt, welche Zeitschlitze TS aktuell überhaupt zur Verfügung stehen. Außerdem erfolgt eine Information darüber, wieviel Spreizcodesequenzen C aktuell aktiv sind bzw. wieviel Spreizcodesequenzen C aktuell noch zur Verfügung stehen. Dies kann für jedes einzelne Frequenzband F im Cluster durchgeführt werden. Dadurch wird die Auswahl einer geeigneten Übertragungsressource durch die Teilnehmerstation MS wesentlich beschleunigt, da die Teilnehmerstationen MS nur noch diejenigen Übertragungsressourcen ausmessen müssen, welche von einer Basisstation BS auch tatsächlich unterstützt werden und auch aktuell zur Verfügung stehen. Hierdurch wird zugleich weniger Signalisierung für den Aufbau einer Verbindung oder auch für einen Ressourcenwechsel (Intracell-Handover oder Intercell-Handover) innerhalb einer Verbindung zwischen den Stationen erforderlich.

Die Information über frei verfügbare Übertragungsressourcen kann erfindungsgemäß in zwei Nachrichten oder in einer Nachricht über den Broadcast Control Channel (BCCH) von den Basisstationen BS an die in ihrer Funk-Reichweite liegenden Teilnehmerstationen MS ausgestrahlt werden.

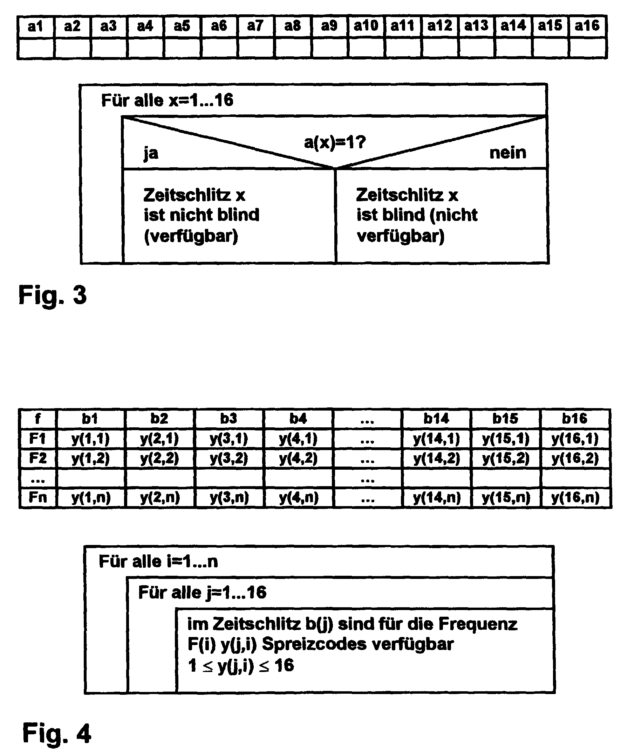

In Fig. 3 ist beispielhaft eine erste Nachricht, betreffend eine Zeitschlitz-Information für ein bestimmtes Frequenzband F bzw. eine bestimmte Funkzelle Z, dargestellt.

Entsprechend Fig. 4 lassen sich die Ressourceninformationen über mehrere Frequenzbänder F auch in nur einer Nachricht zusammenfassen. Hat eine Basisstation BS bzw. Funkzelle Z mehrere Frequenzbänder F, dann kann für jedes Frequenzband F eine getrennte Ressourceninformation oder für alle in der Funkzelle Z verfügbaren Frequenzbänder F eine gemeinsame Ressourceninformation angefordert und übermittelt werden. Dies entspricht einem neuen Informationselement mit n Ressourceninformationselementen für n Frequenzen F einer Zelle.

Die Nachrichten können in einem Informationselement als Bestandteil einer Systeminformation (System Information Message) über den BCCH ausgestrahlt werden.

Die Vorselektion nach freien Zeitschlitzen TS hat den Vorteil, daß z. B. diese Information von den Teilnehmerstationen MS mehrfach genutzt werden kann. Beispielsweise kann sie dazu dienen, bei Modi mit variablem Umschaltpunkt SP zwischen der Abwärtsstrecke DL und der Aufwärtsstrecke UL oder Modi, die eine variable Aufteilung der Frequenzbänder in Paired-Bänder und Unpaired-Bänder unterstützen, den Teilnehmerstationen MS mitzuteilen, welche Zeitschlitze TS auf der Abwärtsstrecke DL und welche auf der Aufwärtsstrecke UL zur Verfügung stehen.

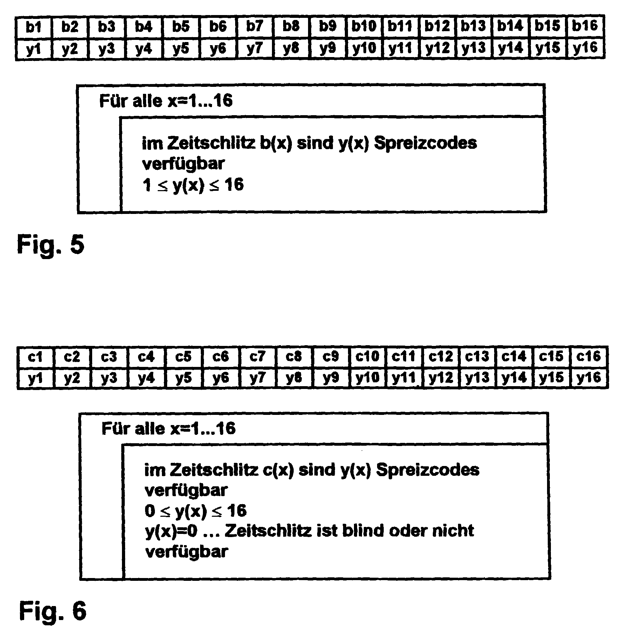

In einem zweiten Informationselement nach Fig. 5 wird dann den Teilnehmerstationen MS mitgeteilt, wieviel Spreizcodesequenzen C noch frei sind und damit, für welchen Dienst noch Übertragungsressourcen frei sind.

Die beiden Informationselemente über die zur Verfügung stehenden Zeitschlitze TS in den Frequenzbändern F und Spreizcodesequenzen C können gemäß Fig. 6 auch komprimiert in einem Informationselement zusammengefaßt übertragen werden. Im Beispiel sind die Informationselemente nach Fig. 3 und Fig. 5 zu einem Informationselement zusammengefaßt.

Außer einer periodischen Ausstrahlung der Informationen über den BCCH besteht nach der Erfindung die Möglichkeit, daß die Teilnehmerstationen MS die Informationselemente über einen Control Channel (CCH) oder Dedicated Control Channel (DCCH) anfordern und auf einem Common Control Channel (CCCH) oder Dedicated Control Channel (DCCH) diese Informationen erhalten, wodurch sich der Signalisierungsaufwand und damit die Zeit für einen Verbindungsaufbau sowie der elektrische Energieverbrauch in den Teilnehmerstationen MS weiter verringert.

Ferner kann man in einem Informationselement angeben, welche Zeitschlitze TS und wieviel Spreizcodesequenzen C in den benachbarten Funkzellen Z zur Verfügung stehen. Dies bedeutet auch Ressourcen-Informationen über benachbarte Funkzellen Z innerhalb eines Clusters, was eine dynamische Zuweisung von Übertragungskapazitäten der Funkzellen Z untereinander zwecks Erhöhung der Teilnehmerkapazität unterstützt.

Eine Änderung der Informationen bezüglich Verfügbarkeit kann dynamisch entsprechend dem Verkehrsaufkommen und der Störungen in den entsprechenden Funkzellen Z durchgeführt werden, wodurch eine intelligente Verteilung der dem Funk-Kommunikationssystem insgesamt zur Verfügung stehenden Übertragungsressourcen unterstützt wird. Da sich insbesondere kleinzellige Funknetze durch eine stark inhomogene Verkehrslastverteilung auszeichnen, lassen sich auf diese Weise deutlich die Teilnehmerkapazität erhöhen und die Qualität der Verbindungen verbessern.

Das Ändern der Ressourcen-Informationen kann eine Basisstation BS selbsttätig durchführen. Über vorgenommene Änderungen informiert sie in einer Systeminformation eine übergeordnete Instanz im Funk-Kommunikationssystem, beispielsweise die Basisstationssteuerung BSC, die diese Information zum Beispiel anhand einer eigens hierzu angelegten Liste an andere Basisstationen BS weiterleitet, damit diese ihre Ressourcen-Informationenen aktualisieren können.

Ferner kann das Messen des Verkehrsaufkommens zwecks Entlastung einer Basisstation BS und aus Gründen der größeren Übersicht über das Verkehrsaufkommen in einer übergeordneten Instanz erfolgen, beispielsweise im Betriebs- und Wartungssystem OMC und aufgrund der Meßwerte eine Ressourcen-Information aktuell konfiguriert werden.

Im FDD-Modus werden in analoger Weise von den Basisstationen BS die Anzahl der verfügbaren Spreizcodesequenzen C auf den Frequenzbändern F an die Teilnehmerstationen MS ausgestrahlt. Hierzu kann ebenfalls ein Informationselement angelegt werden. Alle für den TDD-genannten Ausgestaltungen lassen sich, soweit sie sich nicht Zeitschlitz-orientiert sind, selbstverständlich auf den FDD-Modus übertragen.

Die Erfindung kann auch auf andere Mobilfunkstandards, beispielsweise auf den GSM-Standard angewendet werden. Im Falle eines GSM-Mobilfunknetzes betrifft die Information über die Ressourcen die aktuell zur Verfügung stehenden, d.h. unbenutzten, Zeitschlitze.

## Patentansprüche

1. Verfahren zur Übertragung von Informationen über eine Luftschnittstelle eines Funk-Kommunikationssystems mit wenigstens einer Basisstation (BS) und einer Teilnehmerstation (MS),
bei dem die Teilnehmerstationen (MS) vor Anforderung von Übertragungsressourcen über die aktuell verfügbaren Übertragungsressourcen unterrichtet werden,
**dadurch gekennzeichnet**,
daß die Basisstation (BS) auf Anforderung einer Teilnehmerstation (MS) eine Ressourcen-Information ausstrahlt.

2. Verfahren nach Anspruch 1,
**dadurch gekennzeichnet**,
daß die Teilnehmerstation (MS) eine Ressourcen-Information über die eigene Funkzelle (Z) und/oder über benachbarte Funkzellen (Z) anfordert.

3. Verfahren nach Anspruch 1,
**dadurch gekennzeichnet,**
daß die Teilnehmerstation (MS) über freie Spreizcodesequenzen (C) auf allen nutzbaren Frequenzbändern (F) der eigenen Funkzelle (Z) und/oder benachbarter Funkzellen (Z) unterrichtet wird.

4. Verfahren nach Anspruch 1,
**dadurch gekennzeichnet,**
daß die Teilnehmerstation (MS) über freie Zeitschlitze (TS) auf allen nutzbaren Frequenzbändern (F) unterrichtet wird.

5. Verfahren nach einem der vorstehenden Ansprüche,
**dadurch gekennzeichnet,**
daß die Ressourceninformation für alle Frequenzbänder einer Funkzelle in getrennten Informationselementen oder in einem einem gemeinsamen Informationselement ausgestrahlt wird.

6. Verfahren nach Anspruch 1,
**dadurch gekennzeichnet,**
daß eine Ressourcen-Information erst bei einer Änderung ihres Inhaltes ausgestrahlt wird.

7. Verfahren nach Anspruch 6,
**dadurch gekennzeichnet,**
daß nur die Änderungen, bezogen auf eine vorausgehende Ressourcen-Information, ausgestrahlt werden.
